# EUROPEAN PATENT APPLICATION

(11) **EP 1 674 911 A1**
(43) Date of publication of application: **28.06.2006**
(21) Application number: 05253229.8
(22) Date of filing: 25.05.2005
(51) Int. Cl.: G02B 7/10, H01L 41/04

(54) **Optical lens assembly for a handheld electronic device**

(30) Priority: 21.12.2004 CN 200410077792
(71) Applicant: Maxford Technology Limited, Quarry Bay, Hong Kong (CN)
(72) Inventor: Tirole, Nicolas, 25130 Villers Le Lac (FR); Guibelin, Joel, 25300 Doubs (FR); Yan, Songtao Qianwei Building,Yayuan Road, Longgang District,Shenzhen (CN); Hu,Wei Qianwei Building,Yayuan Road, Longgang District,Shenzhen (CN); Huang,Guohua Qianwei Building,Yayuan Road, Longgang District,Shenzhen (CN)
(74) Representative: Howe, Steven

(57) **Abstract**

An optical lens assembly is disclosed as including a light-sensitive member; first and second lenses/lens groups with their respective optical axis aligned with each other along a common optical axis; and first and second piezo electric ultrasonic linear motors; in which the first motor is operable to move the first and second lenses/lens groups relative to each other to vary their distance; and the second motor is operable to move the light-sensitive member or at least one of the first and second lenses/lens groups to vary the distance between the light-sensitive member and the lens/lens group. A handheld electronic device, e.g. a mobile phone or a personal digital assistant, with digital camera function, and including such an optical lens assembly is also disclosed. There is further disclosed an optical lens system including an optical system, a light-sensitive component, an auto-focus judge for determining if an image captured by the light-sensitive component is in focus, and a driving IC for driving a piezo electric ultrasonic linear motor in response to the result arrived at by the auto-focus judge.

## Description

This invention relates to improvements on an optical lens assembly for use in a handheld electronic device, e.g. mobile phone or personal digital assistant (PDA), and in particular such an assembly installed in such a handheld electronic device, allowing photographs to be taken digitally.

### Background of the Invention

There are now many mobile phones with camera functions. Much research and development has been done on the lens assemblies in such mobile phones. However, as most such mobile phones make use of common optical lens assemblies, it is very difficult to improve the performance of the lens assemblies, in particular to allow for movement of the lenses in such a small space. Some cameras in such mobile phones use fixed-focus lenses, and some use variable-focus lenses. Either way, it is difficult to come up with small-sized optical lens assemblies for use in such handheld devices, e.g. mobile phones.

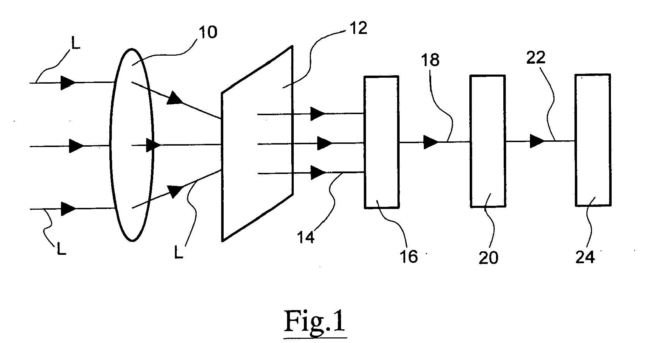

Built-in and add-on taking lenses for mobile phones are of essentially the same principle, as shown in Fig. 1. In existing digital cameras in mobile phones, light rays L are focused by a piece of convex lens 10 onto a light-sensitive component 12, which converts the incoming light into simulated image signals 14, which are then transmitted to an analogue-to-digital converter 16 for conversion into digital image signals 18. Such digital image signals 18 are then processed by an image processor 20 into compact image signals 22 for storage in a memory 24.

As to light-sensitive components, such may be charge coupled devices (CCD) or complementary metal-oxide semiconductors (CMOS). CCD are higher-end components use in taking photographs or scanning of images. As to CMOS, such are mostly used in lower-end products. However, such does not mean that there are significant differences when they are used in cameras. With the improvements in technology, the difference in the practical results of using CCD and CMOS has greatly reduced. As the production cost and degree of deterioration through use of CMOS is rather lower than those of CCD, many camera manufacturers use COMS lenses.

It is thus an object of the present invention to provide an optical lens assembly for use in handheld electronic devices in which the aforesaid shortcomings are mitigated, or at least to provide a useful alternative to the public.

It is also an object of the present invention to provide a new arrangement for performing auto-focus.

### Summary of the Invention

According to a first aspect of the present invention, there is provided an optical lens assembly including at least one light-sensitive member; at least first and second lenses/lens groups with their respective optical axis aligned with each other along a common optical axis; and at least first and second piezo electric ultrasonic linear motors; wherein said first motor is operable to move said first and second lenses/lens groups relative to each other to vary the distance therebetween; and wherein said second motor is operable to move said light-sensitive member or at least one of said first and second lenses/lens groups to vary the distance between said light-sensitive member and said at least one lens/lens group.

According to a second aspect of the present invention, there is provided a handheld electronic device with digital camera function, said device including an optical lens assembly, said lens assembly including at least one light-sensitive member; at least first and second lenses/lens groups with their respective optical axis aligned with each other along a common optical axis; and at least first and second piezo electric ultrasonic linear motors; wherein said first motor is operable to move said first and second lenses/lens groups relative to each other to vary the distance therebetween; and wherein said second motor is operable to move said light-sensitive member or at least one of said first and second lenses/lens groups to vary the distance between said light-sensitive member and said at least one lens/lens group.

According to a third aspect of the present invention, there is provided an optical lens assembly including at least one lens/lens group; at least one light-sensitive member; and at least one piezo electric ultrasonic linear motor; wherein said at least one motor is operable to move, *via* a pin-and-groove arrangement, either said at least one light-sensitive member or said at least one lens/lens group to vary the distance between said at least one lens/lens group and said at least one light-sensitive member.

According to a fourth aspect of the present invention, there is provided a handheld electronic device with digital camera function, said device including an optical lens assembly, said lens assembly including at least one lens/lens group; at least one light-sensitive member; and at least one piezo electric ultrasonic linear motor; wherein said at least one motor is operable to move, *via* a pin-and-groove arrangement, either said at least one light-sensitive member or said at least one lens/lens group to vary the distance between said at least one lens/lens group and said at least one light-sensitive member.

According to a fifth aspect of the present invention, there is provided an optical lens system including an optical system, a light-sensitive component, means for determining if an image captured by said light-sensitive component is in focus, and means for driving a piezo electric ultrasonic linear motor in response to the result arrived at by said determining means.

### Brief Description of the Drawings

Preferred embodiments of the present invention will now be described, by way of examples only, with reference to the accompanying drawings, in which:
Fig. 1 shows a schematic diagram of the principle of operation of prior art digital cameras;
Fig. 2A shows a top view of an optical lens assembly according to a first preferred embodiment of the present invention;
Fig. 2B shows a sectional view taken along the line A-A in Fig. 2A;
Fig. 3A shows the lens assembly in Fig. 2A in a rest configuration;
Fig. 3B shows the lens assembly in Fig. 2A in an activated configuration;
Fig. 3C shows the lens assembly in Fig. 2A in a zoom configuration;
Fig. 3D is an alternative view of the lens assembly in Fig. 3C, with part of the movable parts removed;
Fig. 3E shows the lens assembly in Fig. 3A in an auto-focus configuration;
Figs. 4A to 4C show various perspective views of an optical lens assembly according to a second preferred embodiment of the present invention;
Fig. 5A shows a perspective view of an optical lens assembly according to a third preferred embodiment of the present invention, in a rest configuration;
Fig. 5B shows the lens assembly of Fig. 5A, with the cover removed;
Fig. 5C shows a perspective view of the lens assembly of Fig. 5B in an auto-focus configuration;
Fig. 5D shows an alternative perspective view of the lens assembly shown in Fig. 5C;
Fig. 5E shows a perspective view of the lens assembly of Fig. 5B in a zooming configuration;
Fig. 5F shows an alternative perspective view of the lens assembly shown in Fig. 5E;
Figs. 6A to 6C show various perspective views of an optical lens assembly according to a fourth preferred embodiment of the present invention;
Figs. 7A to 7C show various perspective views of an optical lens assembly according to a fifth preferred embodiment of the present invention;
Figs. 8A to 8C show various perspective views of an optical lens assembly according to a sixth preferred embodiment of the present invention;
Figs. 9A to 9C show various perspective views of an optical lens assembly according to a seventh preferred embodiment of the present invention;
Figs. 10A to 10D show various perspective views of an optical lens assembly according to an eighth preferred embodiment of the present invention;
Fig. 11 shows a top perspective view of an optical lens assembly according to a ninth preferred embodiment of the present invention;
Figs. 12A and 12B show perspective views of an optical lens assembly according to a tenth preferred embodiment of the present invention;
Fig. 12C shows a further perspective view of the lens assembly shown in Fig. 12A with the movable lenses/lens groups and guide rails removed;
Figs. 12D and 12E show the lens assembly shown in Fig. 12A in a zoom configuration;
Figs. 12F and 12G show the lens assembly shown in Fig. 12A in a wide-angle configuration;
Fig. 12H shows the lens assembly shown in Fig. 12A in an auto-focus configuration;
Fig. 12I shows in further detail the lens assembly shown in Fig. 12A;
Figs. 13A to 13C show various perspective views of a lens arrangement according to an eleventh preferred embodiment of the present invention;
Fig. 14A is a perspective view of a module for performing auto-focus function in a first configuration;
Fig. 14B is a perspective view of the module shown in Fig. 14A, in an alternative configuration;
Fig. 14C is an exploded view of the module shown in Fig. 14A;
Figs. 15A to 15C are various perspective views of a further module for performing auto-focus function;
Figs. 16A to 16C are various perspective views of a yet further module for performing auto-focus function; and
Fig. 17 is a schematic diagram showing the relationship of various parts for performing auto-focus function.

### Detailed Description of the Preferred Embodiments

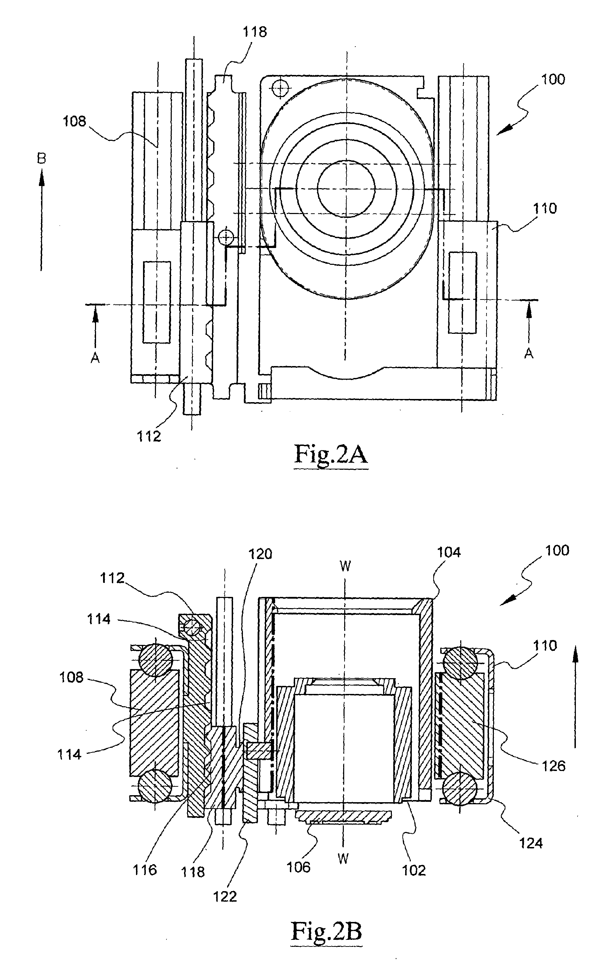

An optical lens assembly according to a first preferred embodiment of this invention is shown in Figs. 2A and 2B, and generally designated as 100. The assembly 100 includes an inner lens tube 102 telescopically received within and movable relative to an outer lens tube 104 in a lengthwise direction. Each of the inner tube 102 and outer tube 104 carries a piece of lens or a group of lenses (not shown), in which all their optical axes are aligned about a common longitudinal optical axis W-W. At a lower end of the lens assembly 100 is mounted a light-sensitive component 106, such as a CCD or a CMOS.

The lens assembly 100 has two piezo electric ultrasonic linear motors 108, 110. An appropriate piezo electric ultrasonic linear motor (hereinafter called "USM") which may be used for realizing the various embodiments of the present invention is a self-vibration type linear ultrasonic motor described in International Patent Application No. PCT/EP2005/004236 filed by Physik Instrumente (PI) GmbH & Co. KG, of Germany, the content of which is fully incorporated herein for reference. The USM 108 is used for effecting activation and auto-focus functions, whereas the USM 110 is used for effecting zooming (magnification) function. The USM 108 is engaged with a first movable plate 112 with parallel grooves 114 on its major surface facing the lens tubes 102, 104. The parallel grooves 114 are slanted to the common longitudinal optical axis W-W of the lens tubes 102, 104 by 45°. The grooves 114 receive correspondingly slanted ridges 116 of a second movable plate 118 for relative sliding movement.

The second movable plate 118 has a horizontal groove 120 for engagement with a third movable plate 122 for simultaneous movement along a path parallel to the axis W-W Because of the groove arrangement between the second movable plate 118 and the third movable plate 122, the second movable plate 118 is slidably movable relative to the third movable plate 122 along a path parallel to an arrow B, which is perpendicular to the axis W-W.

The third movable plate 122 is fixed with a movable part 124 of the USM 110 for simultaneous movement relative to a stationary part 126 of the USM 110 along a path parallel to the arrow B.

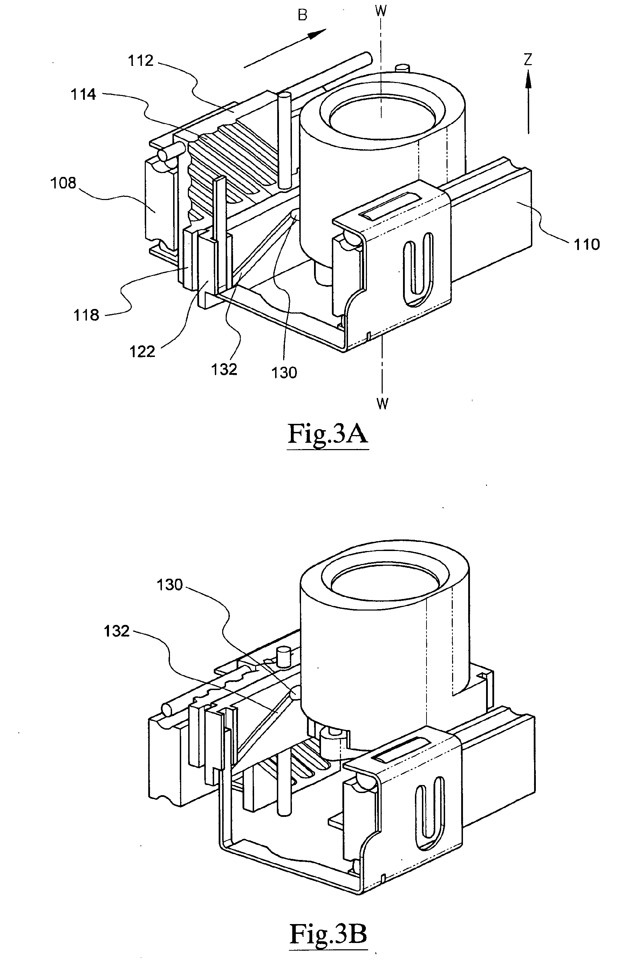

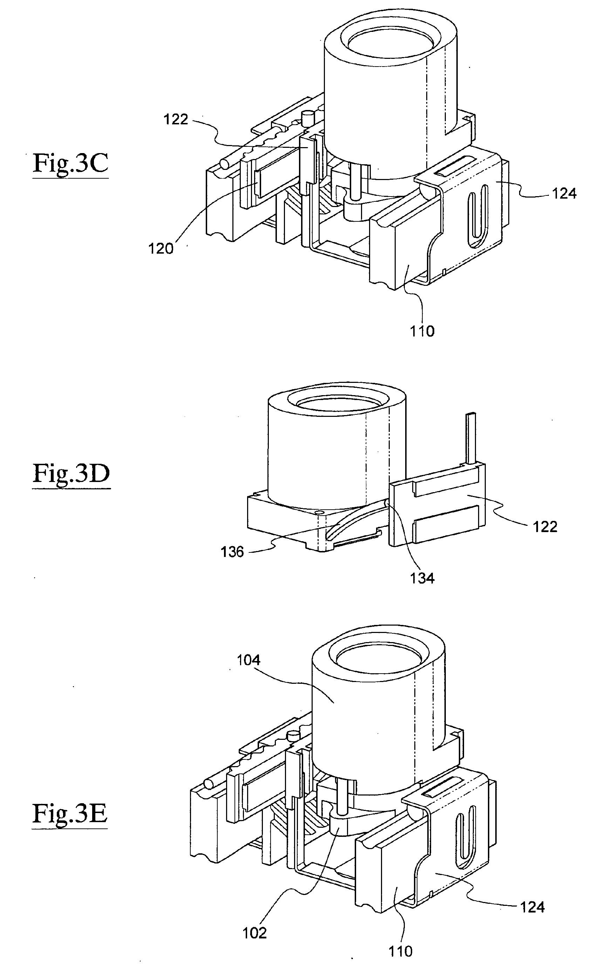

The lens group 104 has a pin 130 which extends into a slanted groove-track 132 of the third movable plate 122 (see Fig. 3A) for relative sliding movement. The third movable plate 122 also has a pin 134 which extends into a curved groove-track 136 of the lens group 102 (see Fig. 3D) for relative sliding movement.

By way of such an arrangement, the first movable plate 112 may be driven by the USM 108 to move along a path parallel to the arrow B only; the second movable plate 118 is movable by the first movable plate 112 to move parallel to the axis W-W only; and the third movable plate 122 is movable by the second movable plate 118 to move parallel to the axis W-W, and by the USM 110, *via* the movable part 124, to move parallel to the arrow B. In any event, the lens groups 102 and 104 are movable parallel to the axis W-W only.

Figs. 3A to 3E show various configurations of the lens assembly 100 during operation. Fig. 3A shows the lens assembly 100 in an OFF configuration, in which the lens tubes 102, 104 are in their respective lowermost positions. When the digital camera function in the mobile phone is activated, the lens assembly 100 will move to the ON configuration as shown in Fig. 3B. To move to this activated configuration, the USM 108 will drive the first movable plate 112 to move in the direction indicated by the arrow B ("B-direction"). Because of the engagement of the grooves 114 of the first movable plate with the ridges 116 of the second movable plate 118, the second movable plate 118 will move upwardly in the direction indicated by the arrow Z ("Z-direction"), which is parallel to the axis W-W. Because of the horizontal groove 120, the third movable plate 122 will also move in the Z-direction, thus bringing both the lens groups 102, 104 to move in the Z-direction in tandem (i.e. simultaneously in the same direction and through the same distance) to the position as shown in Fig. 3B. In this arrangement, when the lens assembly 100 is activated, part of the lens assembly 100, in particular the outer lens tube 104, extends beyond an outer surface of the handheld device.

To perform zooming function, the user may push a "Zoom +/-" button provided on the handheld device (e.g. mobile phone), whereby the USM 110 will drive the movable part 124 in the B-direction, thus bringing simultaneous movement of the third movable plate 122 in the B-direction. Because of the engagement of the pins 130, 134 with the respective groove-track 132, 136, the inner lens tube 102 will along a path parallel to the optical axis W-W, upwardly or downwardly, e.g. to the position as shown in Figs. 3C and 3D, in accordance with a specific displacement law according to which the shape of the groove-track 136 is designed. The specific extent of magnification may be chosen by the user.

To perform auto-focusing function, the lens assembly 100 performs the same movement as discussed above in relation to the activation of the digital camera function, to assume the configuration as shown in Fig. 3E. This also means that, once the digital camera function is activated, the lens assembly 100 assumes a configuration performing auto-focusing function.

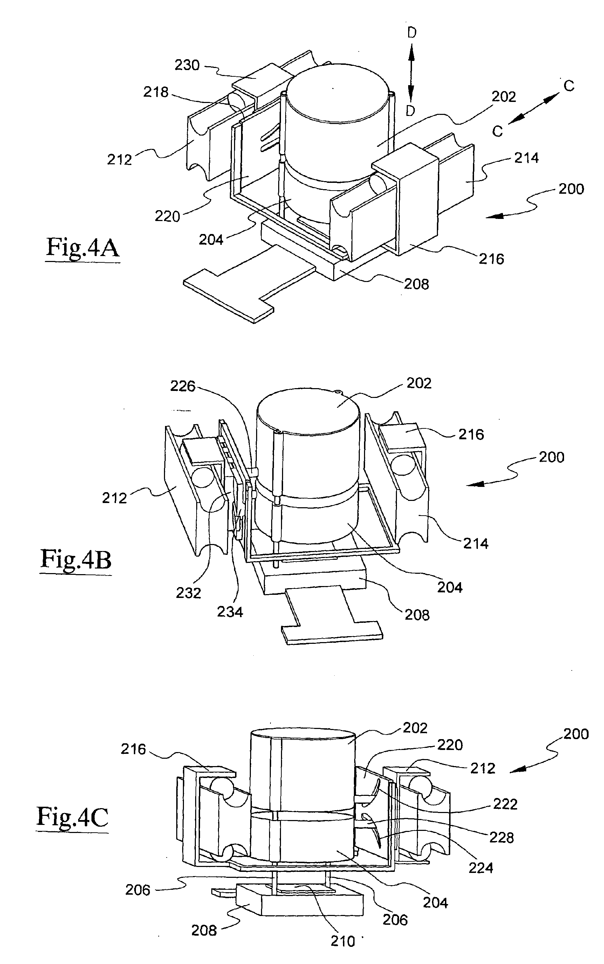

As shown in Figs. 4A to 4C, an optical lens assembly according to a second preferred embodiment of the present invention, generally designated as 200, includes upper and lower lenses or lens groups 202, 204 which are arranged serially, and with their optical axes aligned with each other. Two upstanding poles 206 are provided for connecting the upper and lower lens groups 202, 204 to restrict the lens groups 202, 204 to move only along a path parallel to the common optical axis, and to ensure their proper alignment during such movement. On a platform 208 from which the poles 206 extend is mounted a light-sensitive component 210, e.g. a CCD or a CMOS.

A movable part 216 of a USM 214 is fixedly engaged with a plate 218 on an inwardly facing surface 220 of which is provided with upper and lower recessed tracks 222, 224. A pin 226 fixed with and extending from the upper lens group 202 is received within the upper track 222 for relative sliding movement. Similarly, a pin 228 fixed with and extending from the lower lens group 204 is received within the lower track 224 for relative sliding movement. Upon activation of the motor 214, the movable part 216 of the USM 214 is movable relative to the rest of the USM along a path parallel to the bi-directional arrow C-C. This brings about corresponding movement of the plate 218 in the same direction. Because of the engagement of the pins 226, 228 with the corresponding recessed track 222, 224, and the fact that the lens groups 202, 204 can only move along a path parallel to the common optical axis (as indicated by the bi-directional arrow D-D), the lens groups 202, 204 will move relative to each other along a path parallel to the bi-directional arrow D-D, the extent and manner of which being determined by the specific displacement law according to which the shapes of the tracks 222, 224 are designed, to achieve zooming function according to the user's choice and need. When both lens groups 202, 204 move from one end of the tracks 222, 224 to the other end such that the lens groups 202, 204 are furthest away from each other, the view angle will become wide-angle.

To perform auto-focus function, a USM 212 is activated. A movable part 230 of the USM 212 is fixedly engaged with a plate 232 provided with a number of parallel grooves which are slanted relative to the horizontal. Correspondingly slanted ridges are provided on a plate 234 for meshing with the grooves on the plate 232 for relative sliding movement. The plate 234 is engaged with the plate 218 for simultaneously movement along a path parallel to the arrow D-D. Thus when the movable part 230 is moved relative to the rest of the USM 212 along a path parallel to the bi-directional arrow C-C, the plate 234 will exhibit movement in the D-D direction, thus bringing the plate 218 into the same movement. As the plate 218 so moves, both the lens groups 202, 204 will also exhibit the same movement in the D-D direction in tandem, thus achieving auto-focus function. In this arrangement, when the lens assembly 200 is activated, part of the lens assembly 200, in particular the upper lens group 202, extends beyond a surface of the handheld device.

Figs. 5A to 5F show another lens assembly according to a third preferred embodiment of the present invention, and generally designated as 300. Fig. 5A shows the lens assembly 300 with the cover, whereas Fig. 5B shows the lens assembly 300 with the cover removed, both in the rest/non-activated configuration. A main feature of this assembly 300 is that both USM's 302, 304 are arranged side by side with each other on one side of lens groups 306, comprising an outer lens group 306a and an inner lens group 306b, of the assembly 300.

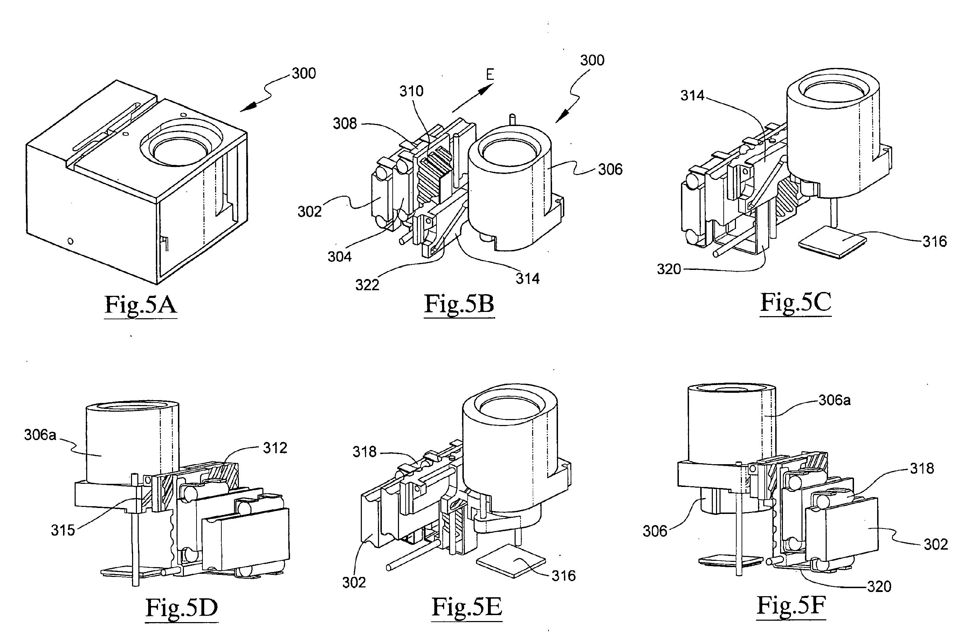

When the lens assembly 300 is activated, the USM 304 is activated whereby its movable part 308 moves relative to the rest of the USM 304 in the direction indicated by the arrow E ("E-direction"). Because of the engagement of slanted grooves 310 of the movable part 308 with correspondingly slanted ridges 312 of a movable plate 314, movement of the movable plate 308 in the E-direction will bring about upward movement of the movable plate 314, which will in turn bring about upward movement of all the movable lens groups 306 in tandem, relative to the light-sensitive component 316 to the extended configuration as shown in Figs. 5C and 5D, which is also the configuration effecting auto-focus function.

To perform zooming function, the USM 302 is activated so that its movable part 318 moves relative to the rest of the USM 302 in the E-direction. As the movable part 318 is fixedly engaged with the plate 314 *via* a bracket 320, the plate 314 will exhibit simultaneous movement in the E-direction. As the inner lens group 306b has a pin extending into a groove 322 of the plate 314, movement of the plate 314 in the E-direction will lower the inner lens group 306b relative to the outer lens group 306a, to the configuration shown in Figs. 5E and 5F. The movable plate 314 also has a pin (not shown) extending into a curved groove 315 on the outer lens group 306a for relative sliding movement. Movement of the plate 314 in the E-direction will thus also bring about movement of the outer lens group along its optical axis. Such an arrangement thus allows zooming function to be performed. In this arrangement, when the lens assembly 300 is activated, part of the lens assembly 300, in particular the upper lens group 306, extends beyond a surface of the handheld device.

In all the above arrangements, when the digital camera function is activated, the lens assemblies 100, 200, 300 are activated, whereby part of the lens groups extend beyond an outer surface of the respective handheld device. However, some may consider such arrangements not aesthetically pleasing. The following further arrangements allow lens assemblies to be provided in the very limited space of handheld electronic devices, yet not extending beyond the device when the digital camera function is activated.

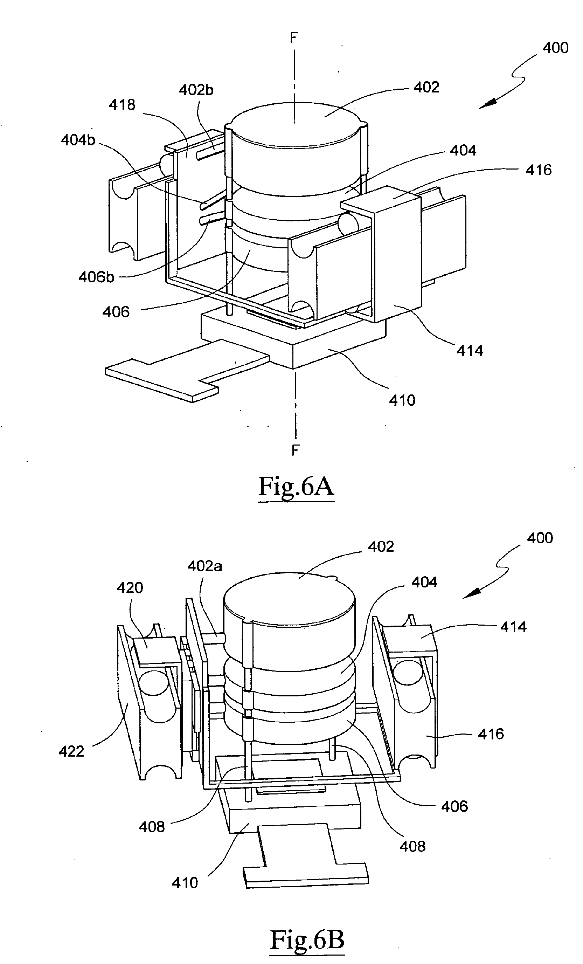

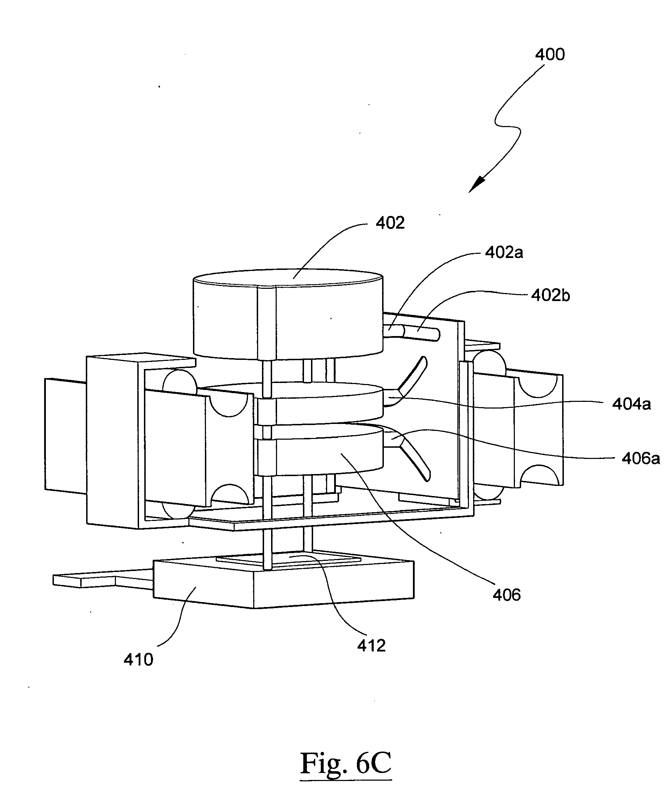

Figs. 6A to 6C show various perspective views of a lens assembly according to a fourth preferred embodiment of the present invention, and generally designated as 400. This lens assembly 400 has an upper lens/lens group 402, a middle lens/lens group 404 and a lower lens/lens group 406 whose respective optical axis are aligned with one another, and coinciding with a common axis F-F. The lens/lens groups 402, 404, 406 are connected with each other by poles 408 for movement only along the axis F-F. The poles 408 extend from a platform 410 to which is mounted a light-sensitive component 412 for capturing the light/image transmitted *via* the lenses/lens groups 402, 404, 406.

The upper lens/lens group 402 has a pin 402a extending into a groove 402b, which is perpendicular to the axis F-F, of a plate 418. This arrangement ensures that the upper lens/lens group 402 can only move parallel to the axis F-F in tandem with movement of the plate 418 in the same direction. This upper lens/lens group 402 may be the outermost lens substantially co-planar with the outer surface of the handheld electronic device.

With similar arrangement as discussed above in relation to the previous three lens assemblies 100, 200, 300, movement of a movable part 414 of a USM 416 will bring about corresponding movement of the plate 418 along a path perpendicular to the axis F-F. Because of engagement of a pin 404a of the middle lens/lens group 404 with an upwardly curved groove 404b on the plate 418, and engagement of a pin 406a of the middle lens/lens group 406 with a downwardly curved groove 406b on the plate 418, movement of the plate 418 along a path perpendicular to the axis F-F will cause the lenses/lens groups 404, 406 to move relative to each other along a path parallel to the axis F-F to vary their distance, and their respective distance from the light-sensitive component 412, to achieve zooming function.

Again, with similar arrangement as discussed above in relation to the previous three lens assemblies 100, 200, 300, and because of the engagement of the pin 402a with the groove 402b on the plate 418, movement of a movable part 420 of a USM 422 will bring about movement of the plate 418 along a path parallel to the axis F-F, which will cause the lenses/lens groups 402, 404, 406 to move in tandem along a path parallel to the axis F-F, to vary their distance from the light-sensitive component 412, to perform auto-focus function.

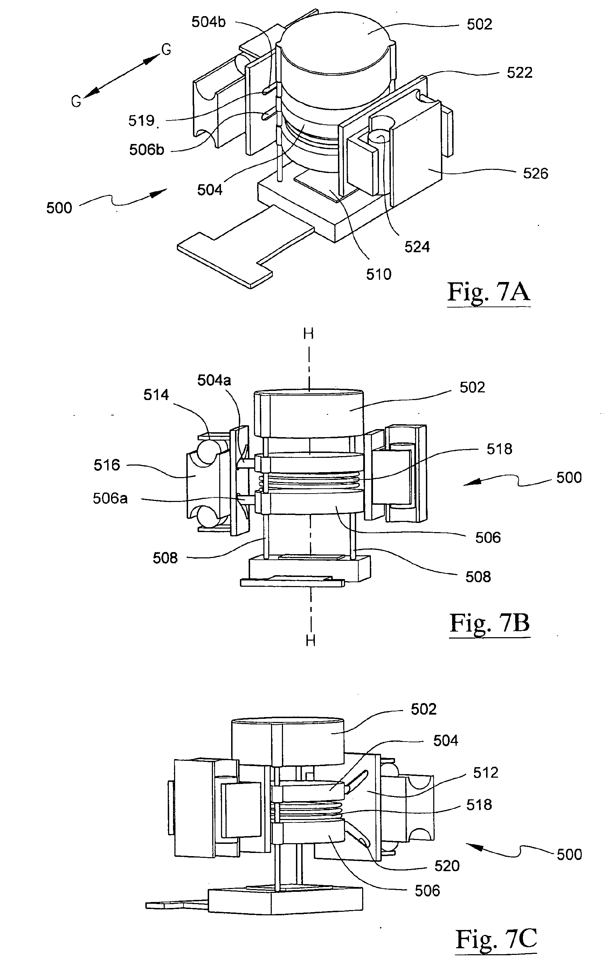

An alternative embodiment, as shown in Figs. 7A to 7C and generally designated as 500, has an upper lens/lens group 502, a middle lens/lens group 504 and a lower lens/lens group 506 connected by poles 508 with one another, with their respective optical axis aligned with one another. The upper lens/lens group 502 is stationary, i.e. not movable relative to the rest of the lens assembly 500, in particular a light-sensitive component 510.

The middle lens/lens group 504 has a pin 504a extending into an upper curved groove 504b of a plate 512 for relative sliding movement. The lower lens/lens group 506 has a pin 506a extending into a lower curved groove 506b of the plate 512 for relative sliding movement. The plate 512 is fixed with a movable part 514 of a USM 516 for movement relative to the rest of the USM 516 and the lens assembly 500.

A special feature of this arrangement is that the lower curved groove 506b is of a height larger than the width/diameter of the pin 506a. A coil spring 518 is provided between the middle lens/lens group 504 and lower lens/lens group 506. The pin 506a of the lower lens/lens group 506 normally moves relative to the groove 506b on and along a lower upwardly facing surface 520 of the groove 506b.

Upon activation of a the USM 516, the movable part 514 will move parallel to the bi-directional arrow G-G, which is perpendicular to a common optical axis H-H of the lens/lens groups 502, 504, 506. The plate 512, which is fixed to the movable part 514, will exhibit simultaneous movement with the plate movable part 514, but causing the lens/lens groups 504, 506 to move relative to each other parallel to the common optical axis H-H, to achieve zooming function.

The lower lens/lens group 506 is also fixed with a plate 522, which is in turn fixedly engaged with a movable part 524 of a USM 526 for movement relative to the rest of the lens assembly 500 parallel to the axis H-H. As the lower curved groove 506b is of a height larger than the width/diameter of the pin 506a of the lower lens/lens group 506, the movable part 524 of the USM 526 may thus be activated to move the lower lens/lens group 506 parallel to the axis H-H, against the biasing force of the spring 518, relative to the middle lens/lens group 504 and the light-sensitive component 510, to achieve auto-focus function. As in the case of the lens assembly 400 discussed above, all the components of the lens assembly 500 may be fully enclosed within the interior space of a handheld electronic device, with the upper lens/lens group 502 being co-planar with an outside surface of the device.

It should be noted that although in the arrangement 500 discussed above, only the lower curved groove 506b is of a height larger than the width/diameter of the pin 506a of the lower lens/lens group 506, the same effect can be obtained if, instead or in addition, the upper curved groove 504b is of a height larger than the width/diameter of the pin 504a of the upper lens/lens group 504.

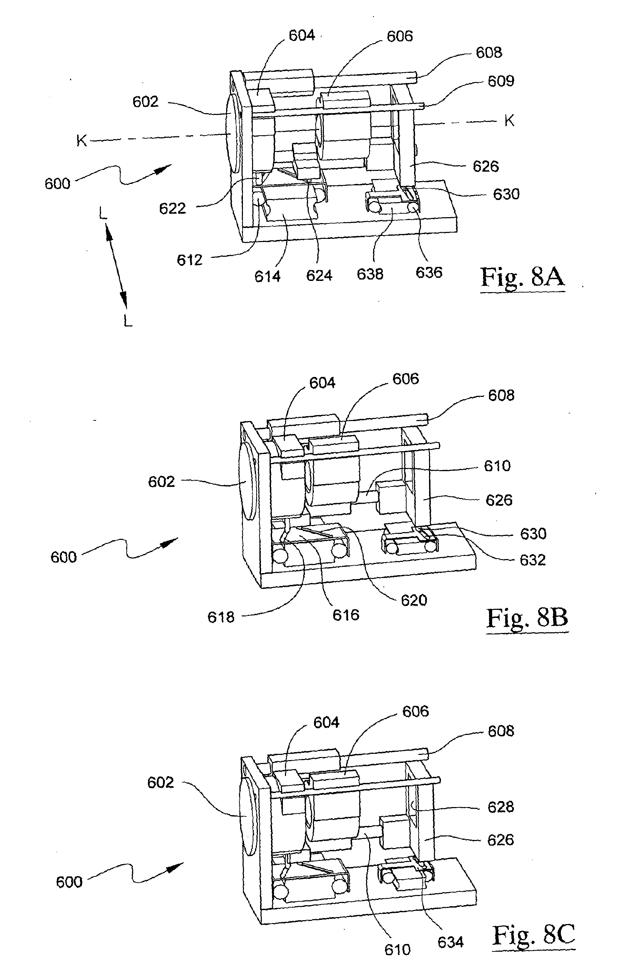

A further embodiment of a lens assembly which may be fully received within an interior space of a handheld electronic device is shown in Figs. 8A to 8C, and generally designated as 600. The lens assembly 600 has a piece of fixed lens 602, two movable lenses/lens groups 604, 606 which are aligned with the fixed lens 602 such that their respective optical axis coincide with one another, along a common optical axis K-K. The lens group 604 is confined by rail guides 608, 609 to move parallel to the common optical axis K-K, and the lens group 606 is confined by rail guides 608, 610 to move parallel to the common optical axis K-K.

A movable part 612 of a USM 614 is fixed with a cam plate 616 on which are provided two non-parallel grooves 618, 620. The movable part 612 is movable relative to the rest of the USM 614 parallel to the bi-directional arrow L-L, which is perpendicular to the axis K-K. A pin 622 fixed with and extending downwardly from the lens group 604 is received within the groove 618 for relative movement. Similarly, a pin 624 fixed with and extending downwardly from the lens group 606 is received within the groove 620 for relative movement. Thus activation of the USM 614 will selectively cause the lenses/lens groups 604, 606 to move towards or away from each other, both parallel to the axis K-K, and with their optical axes properly aligned, between the configuration as shown in Fig. 8A and that in Fig. 8B, to perform zooming function, as desired by the user.

A frame 626 mounted with a light-sensitive component 628 (e.g. CCD or CMOS) is also confined by guide rails 608, 609, 610 to move parallel to the common optical axis K-K. A pin 630 fixedly engaged with and extending downwardly from the frame 626 is received within a groove 632 of a cam plate 634 fixedly engaged with a movable part 636 of a USM 638 for simultaneous movement. The movable part 636 of the USM 638 is movable relative to the rest of the USM 638 parallel to the bi-directional arrow L-L, and the groove 632 is slightly inclined relative to the bi-directional arrow L-L. Thus, upon activation of the USM 638, movement of the movable part 636 will cause the frame 626 and the light-sensitive component 628 mounted therewith to move parallel to the axis K-K, to achieve auto-focus function. As the groove 632 is only slightly inclined relative to the bi-directional arrow L-L, precise adjustment may be effected for auto-focus function.

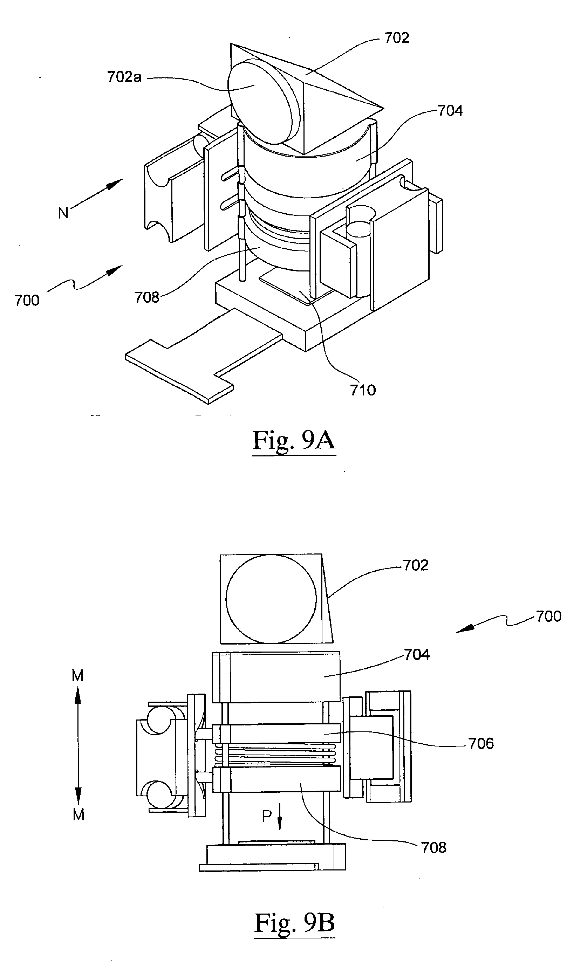

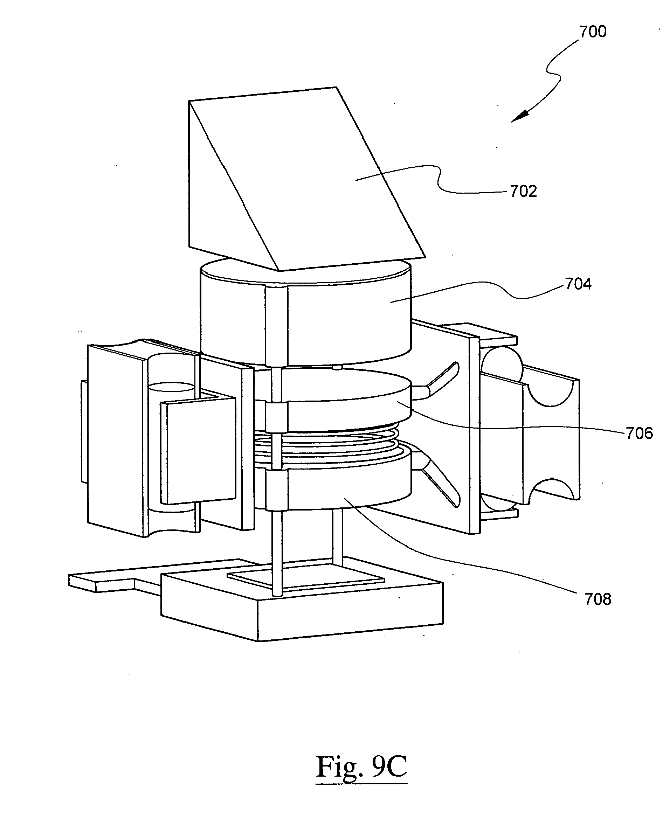

Lens assemblies according to the present invention may be designed such that the direction of travel of incoming light is rotated by 90° before being captured by the light-sensitive component, e.g. to suit the particular shape and configuration of the handheld electronic device. A lens assembly designed according to such a principle is shown in Figs. 9A to 9C, and generally designated as 700. It can be seen that this lens assembly 700 is similar to the lens assembly 500 discussed above and shown in Figs. 7A to 7C. A main difference between this lens assembly 700 and the lens assembly 500 is that, in the lens assembly 700, an optical prism 702 is provided above an upper lens/lens group 704, a middle lens/lens group 706 and a lower lens/lens group 708. Both the prism 702 and the upper lens/lens group 704 are stationary, i.e. fixed relative to the rest of the lens assembly 700, and the lens groups 704, 706 are movable parallel to the bi-directional arrow M-M, which is parallel to the common optical axis of the lenses/lens groups 704, 706, 708.

The prism 702 will change (through internal refraction) the direction of travel of the incident light (indicated by the arrow N) by 90° (indicated by the arrow P) to be captured by a light-sensitive component 710. The prism 702 has a cylindrical portion 702a which may be arranged to be coplanar with an outer surface of the handheld electronic device.

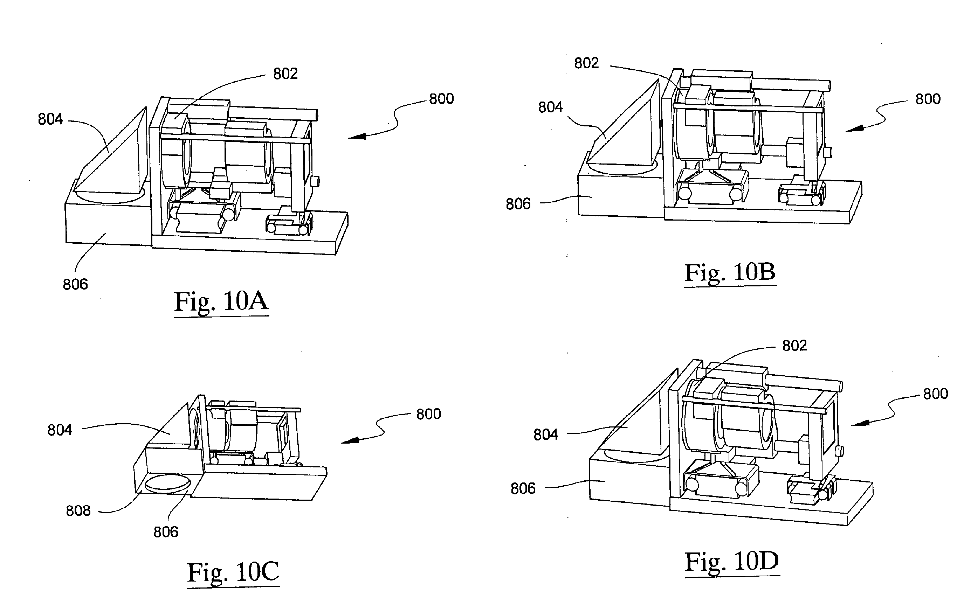

A further embodiment of a lens assembly using an optical prism is shown in Figs. 10A to 10D, and generally designated as 800. It can be seen that this arrangement is similar to the lens assembly 600 discussed above and shown in Figs. 8A to 8C. Instead of having a fixed piece of lens 602 at one end of the assembly 600, in the lens assembly 800, positioned adjacent a movable lens/lens group 802 is a fixed optical prism 804. A further fixed lens/lens group 806 is positioned adjacent the light-incident surface of the prism 804. The surface 808 of the lens/lens group 806 may be arranged to be coplanar with an outer surface of the handheld electronic device installed with such a lens assembly 800.

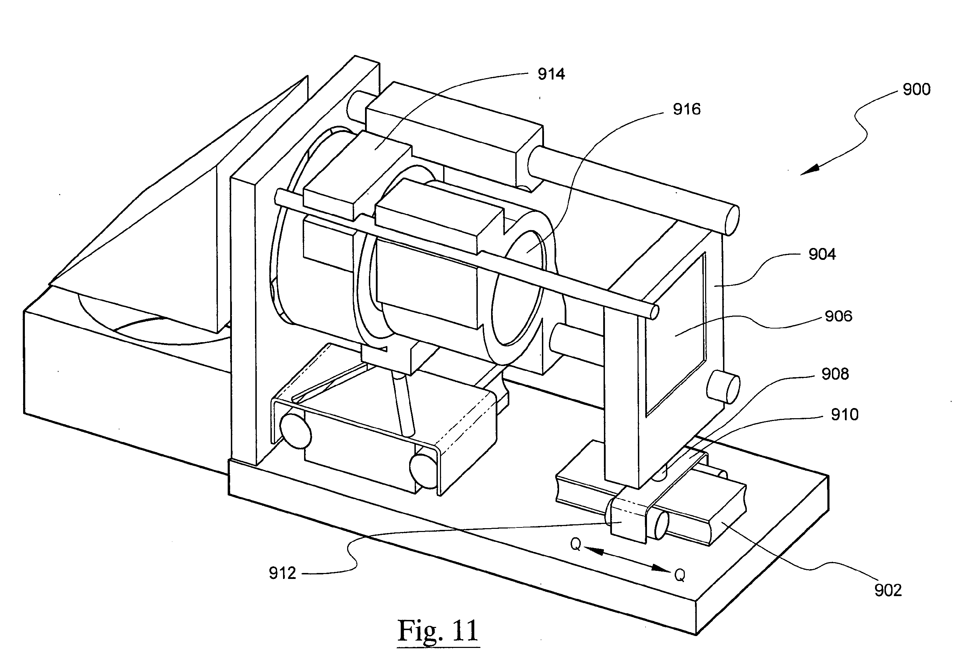

A yet further lens assembly using an optical prism is shown in Fig. 11, and generally designated as 900. This lens assembly 900 is similar to the lens assembly 800, apart from the arrangement of a USM 902 responsible for achieving auto-focus function. A frame 904 mounted with a light-sensitive component 906 is fixedly engaged with a downwardly extending pin 908. The pin 908 is fixedly engaged with a bracket 910 which is in turn fixedly engaged with a movable part 912 of the USM 902 for simultaneous movement. The USM 902 is arranged such that the movable part 912 is movable relative to the rest of the USM 902 parallel to the bi-directional arrow Q-Q, which is parallel to the common optical axis of the movable lenses/lens groups 914, 916. By virtue of such an arrangement, upon activation of the USM 902, the frame 904 and the light-sensitive component 906 is movable parallel to the common optical axis, relative to the lenses/lens groups 914, 916, to perform auto-focus function.

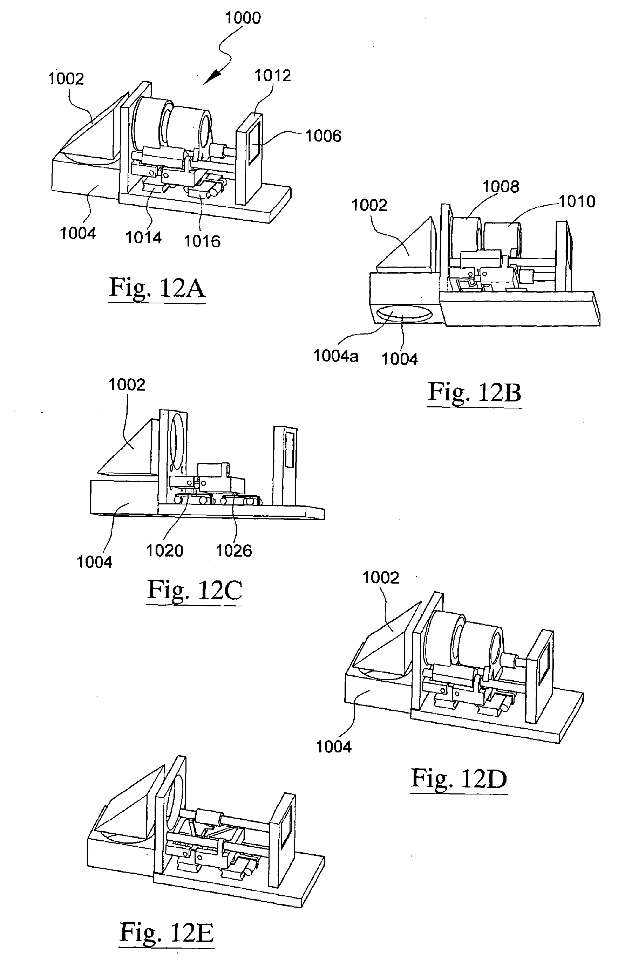

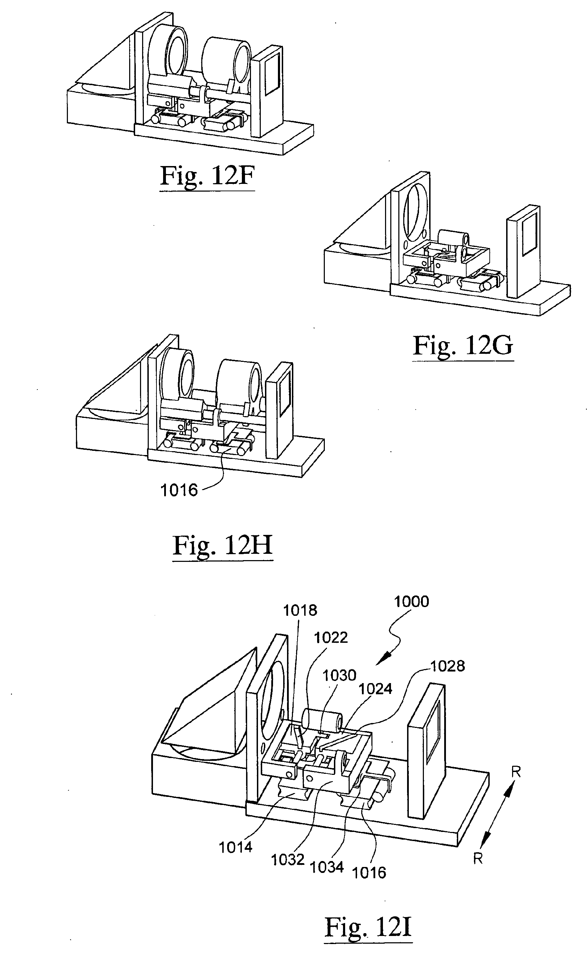

A still further lens assembly employing an optical prism is shown in Figs. 12A to 121, and generally designated as 1000. As shown in Figs. 12A to 12C and 121, the lens assembly 1000 has an optical prism 1002 adjacent a lens/lens group 1004. Light falling onto a surface 1004a of the lens/lens group 1004 is reflected/rotated by the prism 1002 by 90° to fall onto a light sensitive component 1006, e.g. a CCD or a CMOS, after passing through lenses/lens groups 1008, 1010. The prism 1002, the lens/lens group 1004, and a plate 1012 mounted with the light-sensitive component 1006 are stationary, and cannot move relative to the lens assembly 1000. The lenses/lens groups 1008, 1010 are confined to be movable relative to the rest of the lens assembly 1000 only parallel to their common optical axis, as in the case of the lens assembly 900 discussed above and shown in Fig. 11.

The assembly 1000 has two USM's 1014, 1016. A cam plate 1018 is fixed with a movable part of the USM 1014 for simultaneous movement parallel to the bi-directional arrow R-R, which is perpendicular to the common optical axis. A pin 1020 fixedly engaged with and extending downwardly from the lens/lens group 1008 is received within a groove 1022 of the cam plate 1018. A pin 1026 fixedly engaged with and extending downwardly from the lens/lens group 1010 is received within a groove 1028 of the cam plate 1024. The cam plate 1018 and the cam plate 1024 are engaged by a finger 1030 for simultaneous movement parallel to the bi-directional arrow R-R. Because of the orientation of the grooves 1022, 1028, movement of the cam plates 1018, 1024 parallel to the bi-directional arrow R-R will cause the lenses/lens groups 1008, 1010 to move relative to each other, and relative to the light-sensitive component 1006, parallel to their common optical axis, to achieve zoom and wide-angle functions. In particular, when the lenses/lens groups 1008, 1010 are closest to each other, as shown in Figs. 12D and 12E, they are in a zooming configuration.

As can be seen in Figs. 12H and 12I, the finger 1310 of the cam plate 1018 extends into a recess of the cam plate 1024. This arrangement assists in ensuring that the cam plates 1018, 1024, and the lenses/lens groups 1008, 1010 carried by them, are properly aligned with each other. A pin fixedly engaged with and extending downwardly from a bracket 1032 carrying the cam plate 1024 is received within a slot on a bracket 1034, which is fixed with a movable part of the USM 1016 for simultaneous movement parallel to the bi-directional arrow R-R. The slot on the bracket 1034 is slightly slanted relative to the bi-directional arrow R-R. Thus activation of the USM 1016 will cause the bracket 1034 to move parallel to the bi-directional arrow R-R, which will in turn bring about movement of the lens/lens group 1010 parallel to the common optical axis, independent of the lens/lens group 1008, to vary its distance from the lens/lens group 1008 and from the light-sensitive component 1006, so as to perform auto-focus function.

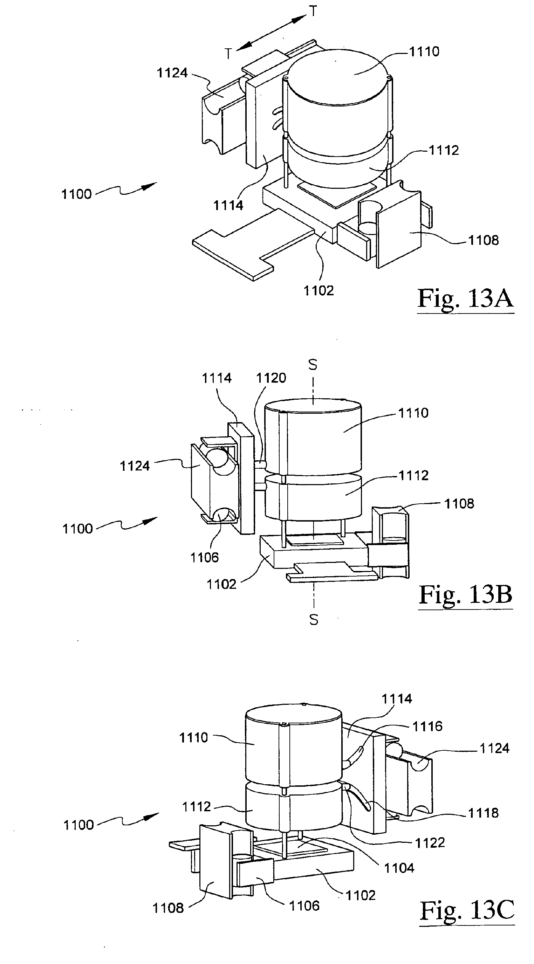

Figs. 13A to 13C show various perspective views of a lens arrangement, generally designated as 1100, which may be used in the type of lens assemblies which at least partly extend beyond an outer surface of the handheld electronic device when activated (called the "movirig out type" arrangement); the type of lens assemblies which do not extend beyond an outer surface of the handheld electronic device when activated (called the "internal type" arrangement), and the type of lens assemblies using at least one optical prism (called the "prism type" arrangement). In particular, in such a lens arrangement, a platform 1102 mounted with a light-sensitive component 1104 is fixedly engaged with a movable part 1106 of a USM 1108 for movement parallel to a common optical axis S-S of lenses/lens groups 1110, 1112 to vary the distance between the light-sensitive component 1104 and the lenses/lens groups 1110, 1112, thus effecting auto-focus function.

A plate 1114 of the lens assembly 1100 includes an upper curved recess 1116 and a lower curved recess 1118 which curve away from each other. The upper curved recess 1116 receives a pin 1120 extending from the lens/lens group 1110 for relative sliding movement; and the lower curved recess 1118 receives a pin 1122 extending from the lens/lens group 1112 for relative sliding movement. The plate 1114 is fixedly engaged with a movable part of a USM 1124 for simultaneous movement. Activation of the USM 1124 will bring about movement of the plate 1114 parallel to the bi-directional arrow T-T, which will in turn bring about movement of the lenses/lens groups 1110, 1112 relative to each other, and parallel to the common optical axis S-S, to vary their distance, and their distance with the light-sensitive component 1104, to perform zooming function.

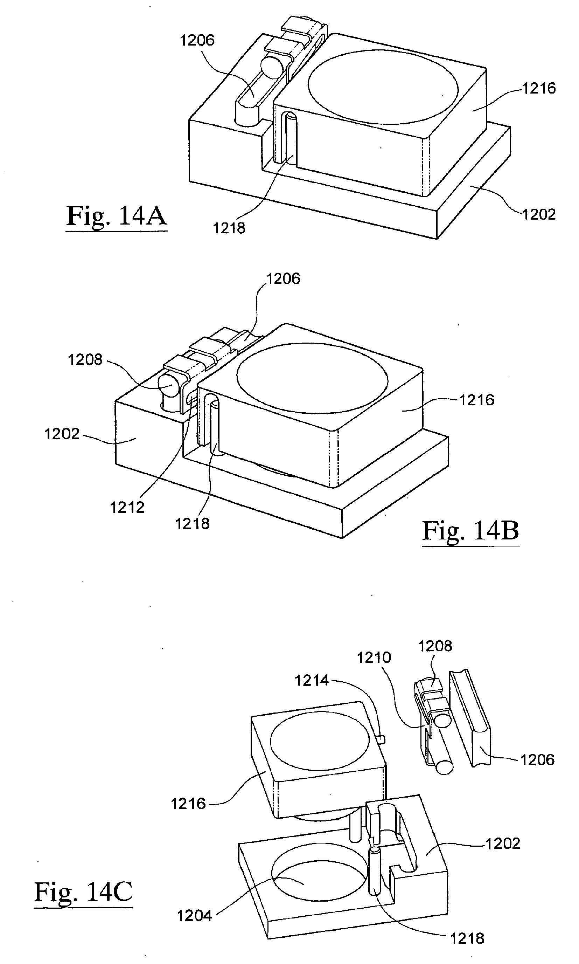

Figs. 14A to 14C show part of a lens assembly according to the present invention, in which only the components relating to performing auto-focus function are shown. The arrangement includes a generally L-shaped cross-sectioned base 1202 with an opening 1204 for mounting a light-sensitive component. On the base 1202 is mounted a USM 1206. A movable part 1208 is fixed with a bracket 1210 with a groove-track 1212. The groove-track 1212 is slightly slanted relative to the horizontal, and receives a pin 1214 extending from a lens/lens group 1216 for relative movement. The lens/lens group 1216 is guided by poles 1218 such that it can only move parallel its optical axis.

Fig. 14A shows the lens/lens group 1216 closest to the base 1202. Upon activation of the USM 1206, the movable part 1208 moves relative to the rest of the USM 1206 to the position shown in Fig. 14B, whereby the lens/lens group 1216 is raised to a position furthest away from the base 1202. The lens/lens group 1216 may thus be moved relative to the remaining lenses/lens groups and the light-sensitive component parallel to the optical axis to perform auto-focus function.

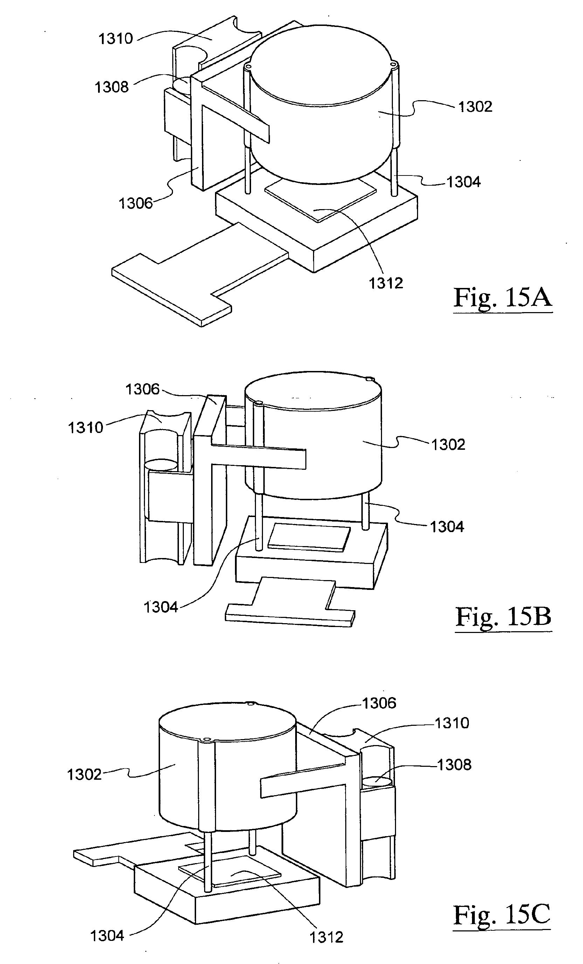

Figs. 15A to 15C show part of a further lens assembly according to the present invention, in which, again, only the components relating to the performance of auto-focus function are shown. As shown in Figs. 15A to 15C, a lens/lens group 1302 is confined for movement parallel to its optical axis by two poles 1304. The lens/lens group 1302 is also fixedly engaged, *via* a bracket 1306, with a movable part 1308 of a USM 1310 for simultaneous movement parallel to its optical axis. Thus, activation of the USM 1310 will bring about corresponding movement of the lens/lens group 1302 with the movable part 1308, to vary the distance between the lens/lens group 1302 and a light-sensitive component 1312, to perform auto-focus function.

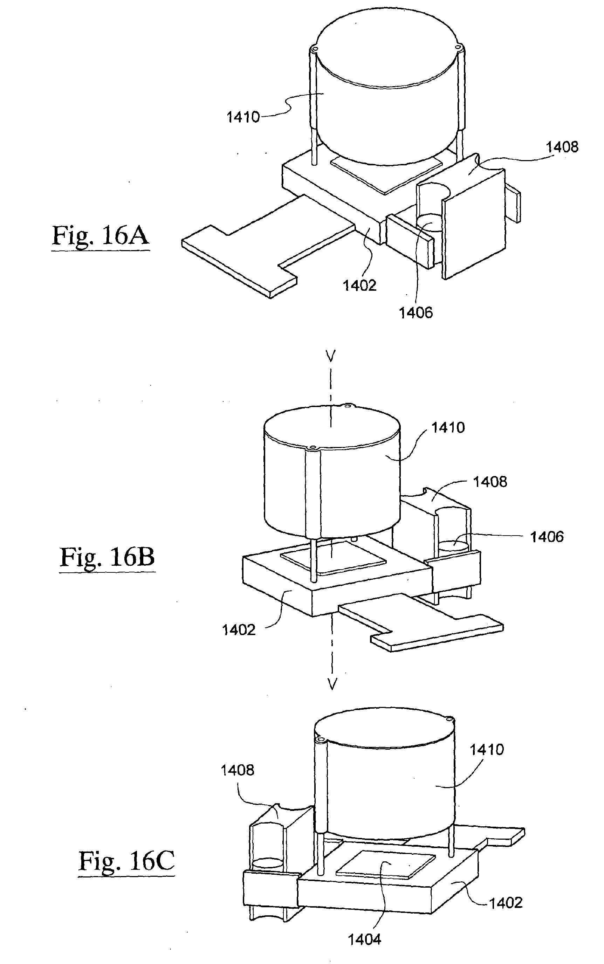

Figs. 16A to 16C show part of a yet further lens assembly according to the present invention, in which, again, only the components relating to the performance of auto-focus function are shown. In this module, a platform 1402 mounted with a light-sensitive component 1404 is fixedly engaged with a movable part 1406 of a USM 1408 for simultaneous movement parallel to the optical axis V-V of a lens/lens group 1410, to vary the distance between the lens/lens group 1410 and the light-sensitive component 1404, to perform auto-focus function.

In the conventional manner to perform auto-focus function, a lens group of the lens assembly has an outer layer of an electrically conductive metal, which is in contact with a coating resistance on a plate relative to which the lens group moves to perform auto-focus function. The value of the electrical resistance between the lens group and the plate is thus a function of the length of the electrically conductive metal on the lens group which is in contact with the coating resistance on the plate, which is also a function of the relative position between the lens group and the plate. The value of the electrical resistance can thus be used for determining the position of the lens group relative to the plate, and to the rest of the lens assembly.

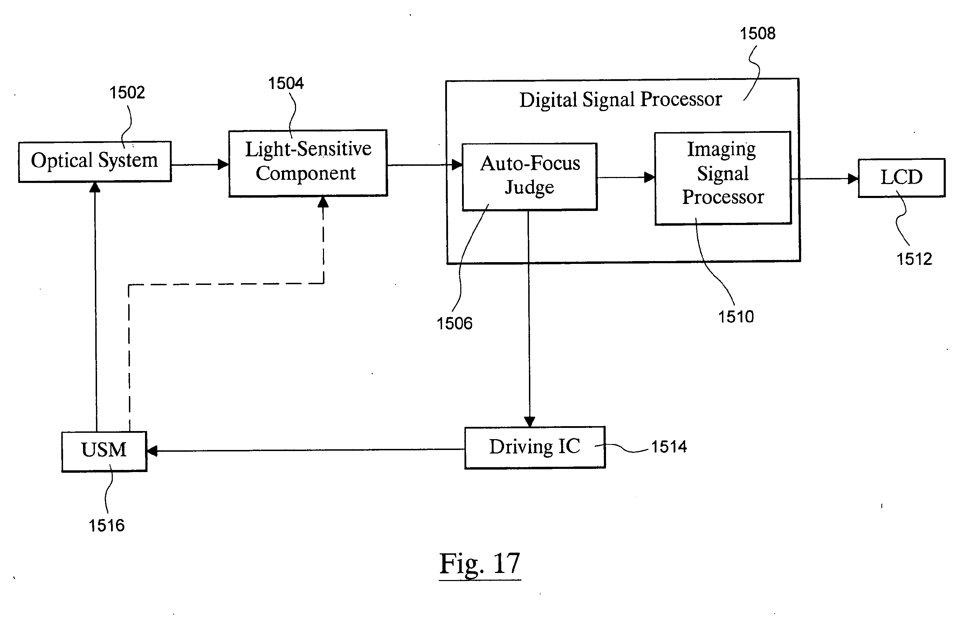

A new arrangement for performing auto-focus is here provided and shown in Fig. 17. In such an arrangement, light falling on the optical system 1502 (including all the lenses/lens groups) is captured by a light-sensitive component 1504, e.g. a CCD or CMOS. The image so captured by the light-sensitive component 1504 is scrutinized by an auto-focus judge 1506 (or called "AF Judge") in a digital signal processor ("DSP") 1508. The AF Judge 1506 is a logic circuit for determining the sharpness of the image, and thus whether the image is in focus. If the captured image passes the scrutiny of the AF Judge 150, the relevant data will be transmitted to an image signal processor ("ISP") 1510 in the DSP 1508 for processing, and subsequently outputted to a liquid crystal display 1512 ("LCD") for viewing by a user.

If, on the other hand, the AF Judge 1506 finds that the image captured by the light-sensitive component 1504 is out of focus, it will transmit signals to a driving integrated circuit (IC) 1514 to drive a USM 1516 dedicated for performing auto-focus function to either move one or more lenses/lens groups in the optical system 1502, or the light-sensitive component 1504 (as the case may be), and as discussed above, so as to adjust the effective focal length of the optical system 1502.

With the optical system 1502 so adjusted, the AF Judge 1506 will again determine if the image now captured by the light-sensitive component 1504 is in focus, and the process will end only when the image captured by the light-sensitive component 1504 is found by the AF Judge 1506 to be in focus.

As movement of the movable part of the USM 1516 is controlled by electric pulses, it is possible to ensure precision of such movement by using a smaller pulse width, which brings about a smaller tolerance of the USM 1516. If the pulse width is sufficiently small, the tolerance should be negligible. For example, the pulse width may be as small as 10 micro-second, corresponding to a displacement of around 50 nanometer.

It should be understood that the above only illustrates examples whereby the present invention may be carried out, and that various modifications and/or alterations may be made thereto without departing from the spirit of the invention.

It should also be understood that certain features of the invention, which are, for clarity, described in the context of separate embodiments, may be provided in combination in a single embodiment. Conversely, various features of the invention which are, for brevity, described in the context of a single embodiment, may also be provided separately or in any appropriate sub-combinations.

## Claims

1. An optical lens assembly including:
at least one light-sensitive member;
at least first and second lenses/lens groups with their respective optical axis aligned with each other along a common optical axis; and
at least first and second piezo electric ultrasonic linear motors;
wherein said first motor is operable to move said first and second lenses/lens groups relative to each other to vary the distance therebetween; and
wherein said second motor is operable to move said light-sensitive member or at least one of said first and second lenses/lens groups to vary the distance between said light-sensitive member and said at least one lens/lens group.

2. An assembly according to Claim 1 wherein said second motor is operable to move said at least first and second lenses/lens groups to vary the distance between said light-sensitive member and said lenses/lens groups.

3. An assembly according to Claim 1 or 2 wherein a movable part of said second motor is movable relative to said second linear ultrasonic motor along a path substantially perpendicular to the path of movement of said light-sensitive member or said lens/lens group.

4. An assembly according to Claim 2 wherein a movable part of said second motor is engaged with a first plate member for simultaneous movement, wherein a surface of said plate includes at least one groove which is slanted relative to the direction of movement of said movable part of said second motor.

5. An assembly according to Claim 4 wherein said at least one groove of said first plate member receives at least a ridge of a second plate member for relative sliding movement.

6. An assembly according to Claim 5 wherein said second plate member is engaged with said first and second lenses/lens groups for simultaneous movement substantially parallel to said common optical axis.

7. An assembly according to Claim 1 or 2 wherein said first motor is engaged for simultaneous movement with a third plate member having at least first and second grooves on a major surface thereof.

8. An assembly according to Claim 7 wherein said first lens/lens group includes a male member received within said first groove for relative sliding movement.

9. An assembly according to Claim 1 or 2 wherein said first motor is engaged for simultaneous movement with a third plate member having at least a pin on a major surface thereof.

10. An assembly according to Claim 9 wherein said pin of said plate member is received within a groove of said first lens/lens group for relative sliding movement.

11. An assembly according to Claim 8 wherein said second lens/lens group includes a male member received within said second groove for relative sliding movement.

12. An assembly according to Claim 1 wherein biasing means is operatively associated with said first and second lenses/lens groups.

13. An assembly according to Claim 1 wherein a movable part of said second motor is movable in a direction substantially parallel to the movement of said light-sensitive component or said lens/lens group.

14. An assembly according to Claim 1 or 2 further including an optical prism adapted to change the direction of travel of incoming light.

15. An assembly according to Claim 15 wherein said optical prism is adapted to change the direction of travel of incoming light by substantially 90°.

16. A handheld electronic device with digital camera function, said device including an optical lens assembly, said lens assembly including at least one light-sensitive member; at least first and second lenses/lens groups with their respective optical axis aligned with each other along a common optical axis; and at least first and second piezo electric ultrasonic linear motors; wherein said first motor is operable to move said first and second lenses/lens groups relative to each other to vary the distance therebetween; and wherein said second motor is operable to move said light-sensitive member or at least one of said first and second lenses/lens groups to vary the distance between said light-sensitive member and said at least one lens/lens group.

17. An optical lens assembly including:
at least one lens/lens group;
at least one light-sensitive member; and
at least one piezo electric ultrasonic linear motor;
wherein said at least one motor is operable to move, *via* a pin-and-groove arrangement, either said at least one light-sensitive member or said at least one lens/lens group to vary the distance between said at least one lens/lens group and said at least one light-sensitive member.

18. An assembly according to Claim 17 wherein said at least one lens/lens group includes a pin member received within a groove part of a movable part of said at least one linear ultrasonic motor for relative movement.

19. An assembly according to Claim 18 wherein said groove part of said movable part is slanted relative to the direction of movement of said movable part relative to the rest of the linear ultrasonic motor.

20. An assembly according to Claim 18 wherein said movable part of said motor is movable substantially perpendicular to the direction of movement of said lens/lens group.

21. An assembly according to Claim 18 wherein said movable part of said motor is movable substantially parallel to the direction of movement of said lens/lens group.

22. An assembly according to Claim 17 wherein said at least one lens/lens group includes a groove part receiving a pin member of a movable part of said at least one motor for relative movement.

23. An assembly according to Claim 17 wherein said at least one motor is operable to move a plurality of lenses/lens groups in tandem to vary the distance between said lenses/lens groups and said at least one light-sensitive member.

24. A handheld electronic device with digital camera function, said device including an optical lens assembly, said lens assembly including at least one lens/lens group; at least one light-sensitive member; and at least one piezo electric ultrasonic linear motor; wherein said at least one motor is operable to move, *via* a pin-and-groove arrangement, either said at least one light-sensitive member or said at least one lens/lens group to vary the distance between said at least one lens/lens group and said at least one light-sensitive member.

25. An optical lens system including an optical system, a light-sensitive component, means for determining if an image captured by said light-sensitive component is in focus, and means for driving a piezo electric ultrasonic linear motor in response to the result arrived at by said determining means.

26. A system according to Claim 18 wherein said motor is operable to move at least one lens/lens group or said light-sensitive component to vary their distance.
